(19) Europäisches Patentamt
European Patent Office
Office européen des brevets

(11) **EP 0 857 764 B2**

(12) **NEUE EUROPÄISCHE PATENTSCHRIFT**
Nach dem Einspruchsverfahrens

(45) Veröffentlichungstag und Bekanntmachung des Hinweises auf die Entscheidung über den Einspruch:
**27.08.2008 Patentblatt 2008/35**

(45) Hinweis auf die Patenterteilung:
**21.04.2004 Patentblatt 2004/17**

(21) Anmeldenummer: **98101443.4**

(22) Anmeldetag: **28.01.1998**

(51) Int Cl.:
*C09C 3/04* (2006.01)   *C09C 1/00* (2006.01)
*C09C 1/58* (2006.01)   *C08K 9/08* (2006.01)
*C09D 7/12* (2006.01)   *C04B 14/02* (2006.01)
*C09C 1/36* (2006.01)   *C09C 1/24* (2006.01)
*C09C 1/04* (2006.01)

(54) **Anorganische Pigmentgranulate zum Einfärben von Kunststoffen, Lacken und Baustoffen und ein Verfahren zu deren Herstellung**

Inorganic pigment granulates for colouring plastics, lacquers and building materials, and process for their preparation

Granulés de pigments inorganiques pour colorer des matières plastiques, des laques et des matériaux de construction, et procédé pour les préparer

(84) Benannte Vertragsstaaten:
**DE ES FR GB IT NL**

(30) Priorität: **10.02.1997 DE 19704943**

(43) Veröffentlichungstag der Anmeldung:
**12.08.1998 Patentblatt 1998/33**

(73) Patentinhaber: **Bayer Chemicals AG**
**51368 Leverkusen (DE)**

(72) Erfinder:
• **Linde, Günter, Dr.**
**47800 Krefeld (DE)**
• **Bütje, Kai, Dr.**
**47229 Duisburg (DE)**
• **Eitel, Manfred, Dr.**
**47906 Kempen (DE)**

(56) Entgegenhaltungen:
EP-A- 0 650 939   EP-A- 0 802 241
EP-A- 0 802 242   DE-A- 3 515 797
DE-C- 4 336 613   US-A- 4 116 711
US-A- 5 455 288

**EP 0 857 764 B2**

## Beschreibung

Die vorliegende Erfindung betrifft Pigmentgranulate zum Einfärben von Baustoffen, Lacken und Kunststoffen sowie ein Verfahren zu deren Herstellung und ihre Verwendung unter anderem zur Herstellung von Pasten, Suspensionen und Dispersionsfarben.

Die VerarbeitungDissolverscheibe von Pigmenten verlangt zur Erzielung des optimalen Farbeindrucks ein Aufmahlen der Pigmente zu Primärteilchen. Die dadurch entstehenden Pulver stauben sehr stark, neigen aufgrund ihrer Feinteiligkeit zu Adhäsion und kleben in Dosieranlagen. Bei toxikologisch gefährlichen Stoffen müssen deshalb bei der Verarbeitung Maßnahmen zur Vermeidung einer Gefährdung von Mensch und Umwelt durch entstehende Stäube getroffen werden. Aber auch bei unbedenklichen inerten Stoffen, wie z.B. Eisenoxidpigmenten oder Titandioxidpigmenten ist eine Vermeidung der Staubbelästigung zunehmend vom Markt gewünscht.

Staubvermeidung und verbesserte Dosierung aufgrund guter Fließeigenschaften zur Erzielung eines qualitativ gleichmäßigen Farbeindrucks bei der Anwendung von organischen Medien ist deshalb das Ziel im Umgang mit Pigmenten. Dieses Ziel wird mehr oder weniger durch Anwendung von Granulationsverfahren auf Pigmente erreicht. Dabei werden beispielsweise Aufbau- oder Sprühgranulation angewendet. Kompaktierverfahren sind im allgemeinen wegen der eingeschränkten Dispergierbarkeit der dadurch erhaltenen Granulate weniger geeignet.

Grundsätzlich werden zwei gegenläufige Eigenschaften bei Pigmentgranulaten gefordert: mechanische Stabilität des Granulates und gleichzeitig gute Dispergiereigenschaften im eingesetzten Medium. Die mechanische Stabilität ist verantwortlich für gute Transporteigenschaften, sowohl bei Transport zwischen Hersteller und Anwender als auch für gute Dosierung und Fließeigenschaften beim Einsatz der Pigmente. Sie wird durch hohe Haftkräfte bewirkt und hängt z.B. von Bindemittelmenge oder auch vom Preßdruck beim Verformen ab. Andererseits wird die Dispergierbarkeit durch eine gute Mahlung vor der Granulierung (Naß- und Trockenmahlung), durch die mechanische Energie bei der Einarbeitung (Scherkräfte) und durch Dispergierhilfsmittel, die die Haftkräfte im trockenen Granulat bei der Einarbeitung in ein Medium herabsetzen, beeinflußt. Allerdings ist die Anwendung von größeren Mengen Dispergierhilfsmittel wegen des Kostenverhältnisses Hilfsmittel/Pigment eingeschränkt. Außerdem bewirkt ein hoher Hilfsmittelanteil eine entsprechende Herabsetzung der Farbstärke bzw. des Streuvermögens. Da die Farbstärkeschwankungen im allgemeinen unter $\pm$ 5 % liegen, ist auch der Einsatz von zusätzlichen Mitteln begrenzt, selbst wenn diese gleichzeitig als Haftvermittler und Dispergierhilfsmittel wirken. Auch dürfen die Zusätze nicht die Gebrauchseigenschaften der zu färbenden Medien nachteilig verändern, beispielsweise bei Kunststoffen die Festigkeit oder die Kerbschlagzähigkeit, bei Elastomeren (Polymeren) die elastischen Eigenschaften und die Zähigkeit und bei Farben und Lacken die rheologischen Eigenschaften.

Bekannte Herstellungsverfahren für Pigmentgranulate sind beispielsweise Sprühgranulation (Sprühtrocknung über Scheibe oder Düse) und Aufbaugranulation (Mischer, Wirbelschichtgranulator, Teller bzw. Trommel) oder Kompaktierverfahren.

So wird in EP-A 0 257 423 und DE-A 3 38 41 848 die Sprühgranulation unter Verwendung von Polyorganosiloxanen als hydrophobe, lipophile Zusatzstoffe beschrieben. Der erwähnte Zerstäubungstrockner führt im allgemeinen zu kleinen Teilchengrößen und hohem Feinanteil. Das bedeutet, dass ein wesentlicher Anteil des Materials nicht aus dem Trockner als direkt einsetzbares Granulat erhalten wird, sondern als Feinanteil erst im Filter zurückgehalten wird und dann in den Prozeß zurückgeführt werden muß. Die hydrophobierende Nachbehandlung führt bei sprühgranulierten Produkten zu einem sehr gut fließenden, aber außerordentlich stark staubenden Granulat.

EP-A 0 424 896 offenbart die Herstellung von staubarmen Feingranulaten in einem Herstellungsgang in bekannten Intensivmischern. Es wird hierbei ein niedriger Gehalt an Wachsen in Kombination mit Emulgatoren und Netzmitteln durch Aufbringen einer wäßrigen Dispersion angewendet. Dabei werden im allgemeinen Wassergehalte von 20 bis über 50 % erhalten. Diese Granulate müssen getrocknet und von Über- und Unterkorn getrennt werden.

DE-A 31 32 303 beschreibt staubarme, fließfähige anorganische Pigmentgranulate, die mit unter Wärmeeinwirkung (40 bis 60°C) flüssigwerdenden Bindemitteln gemischt und durch einen Siebvorgang unter Anwendung von Siebhilfe (Druck) granuliert werden.

Aus EP-A 0 144 940 gehen staubarme Pigmentgranulate hervor, die ausgehend von Filterschlamm mit ca. 50°C warmem Wasser durch Zugabe von 0,5 bis 10 % oberflächenaktiven Stoffen und zusätzlich Mineralöl oder flüssigwerdenden Wachsen bei 50 bis 200°C gemischt werden bis zum Schmierpunkt. Der Vorgang erfolgt in Intensivmischern, eventuell wird noch nachgranuliert und nachgetrocknet. Im Endprodukt liegt Wasser in einer Menge von 10 bis 15 % vor, was für die Einarbeitung in Kunststoffen nachteilig ist.

In DE-A 28 44 710 wird die Granulation von Pigmenten im Fließbett mit Granulierhilfsmitteln beschrieben, wobei trockenes Pigmentpulver mit Wasser besprüht wird.

DE-C 28 19 004 beschreibt die Granulation von Alkalialuminaten für die Herstellung von Zementen mit Hilfe von Polyhydroxyverbindungen.

GB-A 2 158 084 beschreibt die Herstellung von Farbstoffgranulat mit festen Polyethylenglykolen im Schmelzbereich von 40 bis 150°C mit einem Wachsanteil von 33 bis 66 % bezogen auf das Pigment.

US 4 952 617 beschreibt verbesserte Pigmentdispersionen in wasserhaltigen Systemen unter Verwendung von Trimethylolpropan bzw. Trimethylolethern. Die Verbesserung besteht in einer verbesserten Viskosität der Paste, die sich in einer verlängerten Standzeit verdeutlicht.

In DE-C 43 36 612 wird die Herstellung von hydrophobierten Pigmentgranulaten unter Verwendung von Ölen bestimmter Viskosität nach einem modifizierten Kompaktierverfahren offenbart.

US 3 843 380 zeigt die Herstellung von Pigmentgranulaten unter Verwendung von Eindickmitteln oder Eindickmitteln in Kombination mit Dispergiermitteln.

Aufgabe war es daher, Pigmentgranulate zur Verfügung zu stellen, die gut dispergierbar im Medium sind, gleichzeitig gute Stabilität z.B. beim Transport und bei der Förderung aufweisen und die einfach herzustellen sind.

Gegenstand der Erfindung sind Pigmentgranulate gemäß Anspruch 1.

Als anorganische Pigmente werden bevorzugt Eisenoxide, Titandioxide, Zinkoxide, Chromoxide, Lichtechtpigmente, Bismutvanadat, Ruße (Kohlenstoffpigmente) und Mischungen davon eingesetzt.

Vorzugsweise werden bei 25°C flüssige Polyethylen- oder Polypropylenglykole als Hilfsmittel eingesetzt. Auch Fettalkoholpolyglykolether sind geeignet.

Polyglykole und/oder Fettalkoholpolyglykolether mit Schmelzpunkten unter 35°C, und Siedepunkten von 150°C bis 300°C, insbesondere von 200 bis 300°C, können auch als Hilfsmittel eingesetzt werden.

Als flüssige Hilfsmittel können flüssige Mischungen aus bei 25°C flüssigen Polyethylen- oder Polypropylenglykolen oder flüssige Mischungen aus bei 25°C flüssigen Polyethylen- oder Polypropylenglykolen mit Polyglykolverbindungen mit Schmelzpunkten über 35°C und/oder mehrwertigen Polyhydroxyverbindungen, die in den bei 25°C flüssigen Polyethylen- oder Polypropylenglykolen löslich sind, eingesetzt werden.

Als geeignete Bindemittel für Pigmentgranulate, die gleichzeitig die Dispergierbarkeit in Dispersionsfarben, Putzen und Abtönpasten verbessern, gelten mehrwertige Alkohole wie Diole, Glyzerin, Sorbit, Trimethylolpropan, Polypropylenglykol und Fettalkoholpolyglykolether. Polypropylenglykol und Fettalkoholpolyglykolether sind bei Raumtemperatur flüssig. Polyethylenglykol allein oder in Gemischen mit anderen flüssigen Verbindungen sind besonders geeignet, sofern der Schmelzpunkt nicht höher als 35°C liegt. Schmelzpunkte zwischen 35°C und etwa 100°C führen bei der Granulation häufig dazu, dass aufgrund der erweichten Bindemittel die Granulate zur Verklebung bzw. Anbackungen neigen. Deshalb sind flüssige Bindemittel mit niedrigen Dampfdrücken, hohen Siedepunkten und Erstarrungspunkten nicht über 35°C besonders geeignete Bindemittel sowohl für Sprühgranulation als auch Kompaktiergranulation. Dabei kommen für die Anwendung in Dispersionsfarben, Mehrzweckabtönpasten oder auch Lacksystemen (z.B. wasserlösliche Lacke) hydrophile oder hydrophil/hydrophobe Systeme in Frage.

Als hydrophile Binde- und Dispergiermittel werden mehrwertige Alkohole, Zucker, Cellulose und Cellulosederivate, Sulfonate, Polyacrylate, Phosphate, Polyether, Polyester, Polyasparaginsäure, Polyhydroxiverbindungen auch in Form von Ethern und Estern eingesetzt.

Hydrophobe Gruppierungen können Derivate von Fettalkoholen, Fettsäuren, langkettige Alkylgruppen oder Arylgruppen sowie Silikonverbindungen sein.

Die Pigmentgranulate können zusätzlich Konservierungsstoffe, Entschäumer, Retentionsmittel, Absetzverhinderer, Netzmittel und/oder Emulgatoren enthalten.

Gegenstand der Erfindung ist auch ein Verfahren zur Herstellung der Pigmentgranulate, dadurch gekennzeichnet, dass ein oder mehrere Pigmentpulver mit einem oder mehreren wasserlöslichen, hydrophilen oder hydrophob/hydrophilen bei 25°C flüssigen Hilfsmitteln oder bei 25°C flüssigen Mischungen von wasserlöslichen, hydrophilen oder hydrophob/hydrophilen Hilfsmitteln in einer Menge von 0,1 bis 10 Gew.-%, bezogen auf das Pigmentpulver, vermischt werden und diese Mischung direkt oder in Form einer wäßrigen Suspension einer Granulierung unterworfen wird.

Die Pigmentgranulate können nach mehreren Verfahren hergestellt werden, z.B. durch Sprühtrocknung, Aufbaugranulation und Kompaktieren.

Die Granulierung kann nach dem Sprühverfahren im Gleich- oder Gegenstrom über Ein- oder Zweistoffdüsen bzw. über Zerstäubungstrockner erfolgen, wobei Granulate mit einer mittleren Teilchengröße von 50 bis 500 $\mu$m erzeugt werden.

Aus wäßrigen Pigmentsuspensionen lassen sie sich besonders vorteilhaft unter Zuhilfenahme von Bindemitteln herstellen, die bei der Applikation dispergierfördernd wirken. Die Granulate weisen eine mittlere Teilchengröße von 50 bis 500 $\mu$m auf. Zur Verbesserung der Dispergierbarkeit kann das Material in Suspension einer Naßmahlung unterworfen werden. Nach einem anderen Verfahren kann das trockene Pigmentpulver unter Verwendung von Wasser, wäßrigen Suspensionen oder flüssigen Bindemitteln auf dem Drehteller, in einer Drehtrommel, in einem Mischer oder in einem Wirbelschichtverfahren zu Granulaten mit einer mittleren Teilchengröße von 80 bis 1500 $\mu$m hergestellt werden.

Auch bei der Sprühtrocknung und Aufbaugranulation spielt die Restfeuchte bzw. die Art und Menge der Restflüssigkeit eine Rolle. Der Wassergehalt bei der Trocknung sollte daher im allgemeinen $\leq$ 1 % sein, auf keinen Fall mehr als 2 %. Wasser kann in geringen Mengen durch übliche Verpackungsmittel, wie Papier etc., während des Transports oder während der Lagerung durch Verdunstung entweichen.

Besonders bevorzugt sind Sprühgranulate mit Bindemitteln, die verbesserte Dispergiereigenschaften und gleichzeitig verbesserte Haftung bewirken. Dabei kommen Bindemittel mit niedrigem Dampfdruck oder hohen Siedepunkten in Frage, wie z.B. mehrwertige Alkohole oder kondensierte Polyole.

Bei der Kompaktiergranulation werden anorganische Pigmentpulver mit einem oder mehreren wasserlöslichen, hydrophilen oder hydrophob/hydrophilen, flüssigen Hilfsmitteln oder bei 25°C flüssigen Mischungen von wasserlöslichen, hydrophilen oder hydrophob/hydrophilen Hilfsmitteln vermischt, anschließend kompaktiert und geschrotet, gegebenenfalls eine Fraktion mit einer mittleren Teilchengröße von 100 bis 1000 $\mu$m über Siebung vom Rest befreit und gegebenenfalls diese Produktfraktion nachgerollt.

Bei der Kompaktiergranulation wird mit Linienkräften von 0,1 bis 50 kN/cm kompaktiert, wobei ein Teil der Haftwirkung zwischen den Pigmentteilchen durch Flüssigkeitsbrücken des flüssigen Bindemittels übernommen wird. Als flüssiges Bindemittel kommt Wasser in geringem Umfang, etwa in Mengen kleiner 3 %, bezogen auf Pigment, in Frage.

Bei der Kompaktierung werden bevorzugt Flüssigkeiten mit niedrigen Dampfdrücken und/oder hohen Siedepunkten (> 180°C) eingesetzt.

Granulate aus Trockenpigmenten, z.B. Fertigprodukt, können auch durch schwache Kompaktierung mit Folgeschritten wie Siebmahlen, Sieben und Rückführen von Grob- und/oder Feitgut oder auch weitere Aufbaugranulation auf einem Teller oder in einer Drehtrommel hergestellt werden.

Die Granulierung kann durch Aufbaugranulation mittels Drehteller, Drehtrommel, Mischer oder im Wirbelschichtverfahren erfolgen, wobei bevorzugt Granulate mit einer mittleren Teilchengröße von 100 bis 1500 $\mu$m erzeugt werden, besonders bevorzugt von 125 bis 1000 $\mu$m.

Bei der klassischen Aufbaugranulation auf Drehtellern oder Mischern wird bei höheren Wassermengen z.B. 6 bis 25 % im allgemeinen ein Trocknungsschritt angeschlossen. Durch die Trocknung kann sich die Dispergierbarkeit verschlechtern. Wassermengen von ≥ 1 % führen häufig zu Klumpenbildung und Anbackungen.

Die oben hergestellte Pigmentgranulate können zusätzlich nachbehandelt werden.

Die Nachbehandlung kann durch Aufbringen von Alkoholen, Estern, Silikonverbindungen, Aminen, Amiden, Polyolen, Polyethern, Cellulosederivaten, Polyacrylaten und/oder Polyphosphaten in einer Menge von 0,01 bis 3 Gew.-%, bezogen auf Pigmentgranulate, erfolgen.

Die oben genannte Pigmentgranulate können zum Einfärben von Kunststoffen, Lacken und Baustoffen und zur Herstellung von wäßrigen Dispersionsfarben, Abtönpasten und Slurries verwendet werden.

Die Erfindung soll anhand der nachfolgenden Beispiele näher erläutert werden.

**Beispiele**

**Beispiel 1**

Eine Eisenoxidgelbsuspension (Bayferrox 3920; Handelsprodukt der Bayer AG) wurde mit einer Konzentration von 25 Gew.-% Festoff unter Verwendung von 4 Gew.-% Polyethylenglykol 400 (MG 400), bezogen auf Feststoff, auf einen Sprühtrockner mit 1 mm Düse gegeben und bei 10 bis 13 bar Druck zerstäubt und getrocknet. Die Restfeuchte betrug 0,6 Gew.-%, die mittlere Teilchengröße lag bei 146 $\mu$m. Das gleiche Eisenoxidgelb wurde mit o.g. Polyethylenglykol bei einer Linienkraft von 0,7 kN/cm auf einem Kompaktor mit 200 mm Walzendurchmesser kompaktiert, über ein Sieb von 1,5 mm Maschenweite zerkleinert und nachgerollt. Das Endprodukt hatte eine durchschnittliche Teilchengröße von 755 $\mu$m. Der Versuch wurde wiederholt, wobei zusätzlich nach dem Nachrollen über ein Sieb mit einer Maschenweite von 500 $\mu$m abgesiebt wurde und der Feinanteil von 40-50 Gew.-% der Menge untersucht wurde.

Die Daten sind der nachfolgenden Tabelle 1 zu entnehmen.

Tabelle 1:

| Produkt | Verfahren | PEG* 400 [Gew.-%] | Restfeuchte [Gew.-%] | Auslaufzeit aus 6 mm-Becher [sek]; Staubneigung | mittlere TG** [$\mu$m] | Schnelltest (150 $\mu$m) 1000/2000/4500 [UpM] | rel. Farbstärke*** [%] |
|---|---|---|---|---|---|---|---|
| Pulver | - | - | - | läuft nicht; staubt stark | - | 3/1/1 | 100 |
| Granulat | Sprühtrocknung | 4 | 0,6 | 19; staubt wenig | 146 | 1/1/1 | 99 |
| Granulat | Kompaktierung | 5 | - | 33; staubarm | 755 | 4/1/1 | 98 |

EP 0 857 764 B2

(fortgesetzt)

| Produkt | Verfahren | PEG* 400 [Gew.-%] | Restfeuchte [Gew.-%] | Auslaufzeit aus 6 mm-Becher [sek]; Staubneigung | mittlere TG** [μm] | Schnelltest (150 μm) 1000/2000/4500 [UpM] | rel. Farbstärke*** [%] |
|---|---|---|---|---|---|---|---|
| Granulat | Sieb: 500 μm; Feinanteil | 5 | - | -; staubt wenig | 453 | 2/1/1 | - |
| * PEG - Polyethylenglykol, Molekulargewicht 400 ** TG - Teilchengröße *** in Aufhellung mit $TiO_2$-Bayertitan® R-KB-2 im Verhältnis 1:5Schnelltest: | | | | | | | |

Dispergierenergie bei 1000, 2000 und 4500 Umdrehungen pro Minute für 10 Minuten (150 μm Schichtdicke als Naßfilm). Siehe Dispergierbarkeitstest/Auswertung.

**Beispiel 2**

Eine Suspension von Bayferrox 130M (Eisenoxidrot; Handelsprodukt der Bayer AG) wurde mit einer Konzentration von 50 Gew.-% Feststoff unter Zusatz von 4 Gew.-% Polyethylenglykol 400 (Molekulargewicht 400), bezogen auf Feststoff, auf einem Sprühtrockner bei einer Eingangstemperatur von 300°C durch eine Düse mit 1,2 mm Bohrung verdüst. Die mittlere Teilchengröße betrug 149 μm. Das Granulat fließt sehr gut und weist eine dem Pulver vergleichbare Dispergierbarkeit und Farbstärke auf.

Dasselbe Eisenoxidrot wurde mit 3 Gew.-% Polyethylenglykol 400 vermischt und bei 0,8 kN/cm auf einem Walzenverdichter der Fa. Bepex (Typ 200/100) kompaktiert, über ein Sieb mit 1,5 mm Maschenweite zerkleinert und nachgerollt. Das Granulat hatte eine mittlere Teilchengröße von 776 μm. Der Versuch wurde wiederholt und zusätzlich bei 0,5 mm Maschenweite abgesiebt. Die Dispergierbarkeit war ausreichend, die Farbstärke war genauso gut wie beim Pulver; Staubungsneigung und Fließverhalten waren besser. Die Ergebnisse sind in der nachfolgenden Tabelle 2 zusammengestellt.

Tabelle 2:

| Produkt | Verfahren | Zusatz PEG 400* [Gew.-%] | Auslaufzeit aus 6 mm-Becher [sek] Staubneigung | mittlere TG** | Schnelltest (150 μm) 2000/4500 [UpM] | rel. Farbstärke **** [%] |
|---|---|---|---|---|---|---|
| Pulver | - | - | fließt nicht staubt stark | - | 1/1 | 100 |
| Granulat | Sprühtrocknung*** | 4 | 21 | 149 | 1/1 | 99 |
| Granulat | Kompaktierung | 3 | 37 staubarm | 776 | 2/1 | 99 |
| Granulat | Kompaktierung Sieb:500μm; Feinanteil | 3 | 39 | 396 | 2/1 | 99 |
| * PEG - Polyethylenglykol, Molekulargewicht 400 ** TG - Teilchengröße *** Restfeuchte 0,3 Gew.-% **** in Aufhellung mit $TiO_2$-Bayertitan® R-KB2 im Verhältnis 1:5 | | | | | | |

Die Dispergierbarkeit von Buntpigmenten in Dispersionsfarben wird mittels Dissolver geprüft:
Prüfmedium:          Dispersionsfarbe, Basis PVA-Dispersion (Vinylacetat/Versaticsäurevinylester) , PVK* 55 % (Pigment/Füllstoff-Verhältnis 40/60)
* PVK = Pigmentvolumenkonzentration

Arbeitsweise: 180 g weiße Dispersionsfarbe werden vorgelegt, dann werden 6,0 g des zu prüfenden Buntpigments unter Rühren eingestreut (Bayertitan R-KB-2 / Buntpigment-Gewichtsverhältnis = 5/l).

Prüfbedingungen: Mit einer Dissolverscheibe (Durchmesser 4 cm) werden folgende Dispergierbedingungen eingestellt:

| 20 min | 2000 U/min (4,3 • m sec$^{-1}$) |
| 10 min | 4500 U/min (9,4 • m sec$^{-1}$) |

Nach den einzelnen Dispergierzeiten werden jeweils Aufzüge mit 90 $\mu$m und 150 $\mu$m Naßfilmschichtdicke (Spalthöhe der Aufziehrakel) angefertigt und bei Raumtemperatur getrocknet. Nach der Trocknung werden die Aufzüge (Anstrichfilme) mit einem scharfkantigen Gegenstand abgezogen, wodurch die nichtdispergierten Pigmentteilchen an der Oberfläche als Punkte bzw. Streifen erscheinen.

Bei gut dispergierbaren Granulaten kann zur besseren Differenzierung zusätzlich noch eine Bewertung mit 10 Minuten Rührzeit bei 1000 U/min herangezogen werden.

Auswertung. Die auf die Granulate anzuwendende Dispergierenergie wird mit einer Bewertungsskale von Stufe 1 bis 5 beurteilt:

Stufe 1: keine Stippen
Stufe 2: wenige Stippen
Stufe 3: mäßige Stippen
Stufe 4: viele Stippen
Stufe 5: sehr viele Stippen

Eine gute Dispergierbarkeit ist nur bei den Bewertungsstufen 1 und 2 gegeben, ab Stufe 3 ist die Bewertung für die aufgewendete Dispersierenergie unzureichend.

**Prüfung der relativen Farbstärke von Buntpigmenten in Dispergierfarben in Anlehnung an DIN 53234**

Es wird eine Dispergierfarbe angesetzt wie bei Dispergierbarkeit beschrieben. Die getrockneten Aufzüge werden folgendermaßen ausgewertet:

Die getrockneten Aufzüge werden mit einem Farbmeßgerät (Dataflash 2000, Meßgeometrie: D/8°, Lichtart C/2° mit Glanz) vermessen. Dabei werden die Normfarbwerte X, Y, Z vom Probepigment (P) und vom Bezugspigment (B) ermittelt.

Für die relative Farbstärke F, in %, gilt folgende Gleichung:

$$\text{Relative Farbstärke in \%} = \frac{(K/S)^*Probe}{(K/S)^*Bezug} \times 100$$

Die Berechnung erfolgt in Anlehnung an DIN 53234.

**Feinstaubmessung in Anlehnung an DIN 55 992:**

Die Staubungseigenschaften eines Pulvers oder Granulates können mit dem Heubach "Dustmeter" gemessen werden. Der Austrag an Feinstaub aus einer rotierenden Trommel, durch die ein Luftstrom definierter Stärke strömt, wird an einem Glasfaserfilter gravimetrisch bestimmt. Durch Messungen nach unterschiedlichen Belastungszeiten kann auch der Verlauf der Staubentwicklung als Funktion mechanischer Beanspruchung aufgezeigt werden.

Die Staubwerte werden als Gewicht im Vergleich zum Pulver bewertet. Außerdem wird zum Vergleich die visuelle subjektive Staubbeobachtung beim Umfüllen hingezogen.

**Prüfung des Fließverhaltens durch Auslaufversuche in Anlehnung an DIN 53 211:**

Das Fließverhalten wird durch Messung der Auslaufzeit in Sekunden aus einem zylindrischen Gefäß (Volumen 100 ml) mit konischem Boden durch eine definierte Bohrung (im allgemeinen 6 mm) bestimmt.

**Patentansprüche**

1. Pigmentgranulate, **dadurch gekennzeichnet, dass** die Granulate ein oder mehrere anorganische Pigmente und ein oder mehrere wasserlösliche, hydrophile oder hydrophob/hydrophile bei 25°C flüssige dispergierfördernde Bindemittel oder bei 25°C flüssige Mischungen von wasserlöslichen, hydrophilen oder hydrophob/hydrophilen dispergierfördernden Bindemitteln in einer Menge von 0,1 bis 10 Gew.-%, bezogen auf Pigment, enthalten, eine durchschnittliche Teilchengröße von 50 bis 1500 $\mu$m, ein Schüttgewicht von 0,3 bis 1,8 g/cm$^3$ und einen Wassergehalt von $\leq$ 2 Gew.-%, bezogen auf Pigment aufweisen.

2. Pigmentgranulate nach Anspruch 1, **dadurch gekennzeichnet, dass** als anorganische Pigmente Eisenoxide, Titandioxide, Zinkoxid, Chromoxide, Lichtechtpigmente, Bismutvanadat, Ruß (Kohlenstoffpigmente) und Mischungen davon eingesetzt werden.

3. Pigmentgranulate nach Anspruch 1 oder 2, **dadurch gekennzeichnet, dass** als dispergierfördernde Bindemittel bei 25°C flüssige Polyethylen- oder Polypropylenglykole eingesetzt werden.

4. Pigmentgranulate nach Anspruch 1 oder 2, **dadurch gekennzeichnet, dass** Polyglykole und/oder Fettalkoholpolyglykolether mit Schmelzpunkten unter 35°C, und Siedepunkten von 150°C bis 300°C, vorzugsweise 200 bis 300°C, eingesetzt werden.

5. Pigmentgranulate nach Anspruch 1, **dadurch gekennzeichnet, dass** als flüssige dispergierfördernde Bindemittel flüssige Mischungen aus bei 25°C flüssigen Polyethylen- oder Polypropylenglykolen oder flüssige Mischungen aus bei 25°C flüssigen Polyethylen- oder Polypropylenglykolen mit Polyglykolverbindungen mit Schmelzpunkten über 35°C und/oder mehrwertigen Polyhydroxyverbindungen, die in den bei 25°C flüssigen Polyethylen- oder Polypropylenglykolen löslich sind, eingesetzt werden.

6. Pigmentgranulate nach Anspruch 1, **dadurch gekennzeichnet, dass** als dispergierfördernde Bindemittel mehrwertige Alkohole wie Diole, Glyzerin, Sorbit, Trimethylolpropan, Polypropylenglykol und Fettalkoholpolyglykolether eingesetzt werden.

7. Pigmentgranulate nach Anspruch 1, **dadurch gekennzeichnet, dass** als hydrophile Gruppierungen für dispergierfördernde Bindemittel mehrwertige Alkohole, Zucker, Cellulose und Cellulosederivate, Sulfonate, Polyacrylate, Phosphate, Polyether, Polyester, Polyasparaginsäure, Polyhydroxiverbindungen auch in Form von Ethern und Estern eingesetzt werden.

8. Pigmentgranulate nach Anspruch 1, **dadurch gekennzeichnet, dass** als hydrophobe Gruppierungen für dispergierfördernde Bindemittel Derivate von Fettalkoholen, Fettsäuren, langkettige Alkylgruppen oder Arylgruppen sowie Silikonverbindungen eingesetzt werden.

9. Pigmentgranulate nach Anspruch 1 bis 8, **dadurch gekennzeichnet, dass** die Granulate zusätzlich Konservierungsstoffe, Entschäumer, Retentionsmittel, Absetzverhinderer, Netzmittel und/oder Emulgatoren enthalten.

10. Verfahren zur Herstellung der Pigmentgranulate gemäß Anspruch 1 bis 9, **dadurch gekennzeichnet, dass** ein oder mehrere anorganische Pigmentpulver mit einem oder mehreren wasserlöslichen, hydrophilen oder hydrophob/hydrophilen bei 25°C flüssigen dispergierfördernden Bindemittel oder bei 25°C flüssigen Mischungen von wasserlöslichen, hydrophilen oder hydrophob/hydrophilen dispergierfördernden Bindemitteln in einer Menge von 0,1 bis 10 Gew.-%, bezogen auf das Pigmentpulver, vermischt werden und diese Mischung direkt oder in Form einer wäßrigen Suspension einer Granulierung unterworfen wird.

11. Verfahren nach Anspruch 10, **dadurch gekennzeichnet, dass** die Pigmentgranulate durch Sprühtrocknung hergestellt werden.

12. Verfahren nach Ansprüche 10 und 11, **dadurch gekennzeichnet, dass** die Granulierung nach dem Sprühverfahren im Gleich- oder Gegenstrom über Ein- oder Zweistoffdüsen bzw. über Zerstäubungstrockner erfolgt, wobei Granulate mit einer mittleren Teilchengröße von 50 bis 500 $\mu$m erzeugt werden.

13. Verfahren nach Ansprüche 10 und 11, **dadurch gekennzeichnet, dass** die Mischung in Form einer wäßrigen Suspension einer Naßmahlung unterworfen wird.

**14.** Verfahren nach Ansprüche 10 und 11, **dadurch gekennzeichnet, dass** das trockene anorganische Pigmentpulver unter Verwendung von Wasser, wäßrigen Suspensionen oder flüssigen dispergierfördernden Bindemitteln auf einen Drehteller, in einer Drehtrommel, in einem Mischer oder in einem Wirbelschichtverfahren zu Pigmentgranulaten mit einer mittleren Teilchengröße von 80 bis 1500 $\mu$m hergestellt werden.

**15.** Verfahren nach Anspruch 13, **dadurch gekennzeichnet, dass** das dispergierförderde Bindemittel einer der mehrwertigen Alkohole oder ein kondensierter Polyol ist.

**16.** Verfahren nach Anspruch 10, **dadurch gekennzeichnet, dass** die Pigmentgranulate durch Kompaktierung hergestellt werden.

**17.** Verfahren nach Ansprüche 10 und 16, **dadurch gekennzeichnet, dass** anorganische Pigmentpulver mit einem oder mehreren wasserlöslichen, hydrophilen oder hydrophob/hydrophilen, flüssigen dispergierförderden Bindemittel oder bei 25°C flüssigen Mischungen von wasserlöslichen, hydrophilen oder hydrophob/hydrophilen dispergierförderden Bindemittel vermischt werden, anschließend kompaktiert und geschrotet werden, gegebenenfalls eine Fraktion mit einer mittleren Teilchengröße von 100 bis 1000 $\mu$m über Siebung vom Rest befreit wird und gegebenenfalls diese Produktfraktion nachgerollt wird.

**18.** Verfahren nach Ansprüche 10, 16 und 17, **dadurch gekennzeichnet, dass** die Kompaktierung mit Linienkräften von 0,1 bis 50 kN/cm stattfindet.

**19.** Verfahren nach Anspruch 17, **dadurch gekennzeichnet, dass** als dispergierfördernde Bindemittel Wasser in Mengen kleiner als 3 %, bezogen auf das anorganisches Pigment, verwendet wird.

**20.** Verfahren nach Anspruch 19, **dadurch gekennzeichnet, dass** Hilsmittel mit niedrigen Dampfdrücken und/oder Siedepunkten über 180°C eingesetzt werden.

**21.** Verfahren nach Anspruch 10, **dadurch gekennzeichnet, dass** die Pigmentgranulate durch Aufbaugranulation hergestellt werden.

**22.** Verfahren nach Ansprüche 10 und 21, **dadurch gekennzeichnet, dass** die Granulierung durch Aufbaugranulation mittels Drehteller, Drehtrommel, Mischer oder im Wirbelschichtverfahren erfolgt, wobei Pigmentgranulate mit einer mittleren Teilchengröße von 100 bis 1500 $\mu$m, insbesondere von 125 bis 1000 $\mu$m erzeugt werden.

**23.** Verfahren nach Anspruch 23, **dadurch gekennzeichnet, dass** Wassermengen von 6 bis 25 % verwendet werden.

**24.** Verfahren nach Anspruch 23, **dadurch gekennzeichnet, dass** die Pigmentgranulate anschließend getrocknet werden, so dass eine Wassermenge von weniger als 1 % erreicht wird.

**25.** Verfahren nach Anspruch 10 bis 24, **dadurch gekennzeichnet, dass** die Pigmentgranulate zusätzlich nachbehandelt werden.

**26.** Verfahren nach Anspruch 25, **dadurch gekennzeichnet, dass** die Nachbehandlung durch Aufbringen von Alkoholen, Estern, Silikonverbindungen, Aminen, Amiden, Polyolen, Polyethern, Cellulosederivaten, Polyacrylaten und/oder Polyphosphaten in einer Menge von 0,01 bis 3 Gew.-%, bezogen auf Pigmentgranulate, erfolgt.

**27.** Verwendung der Pigmentgranulate nach Anspruch 1 bis 9 und der nach dem Verfahren gemäß Ansprüche 10 bis 26 hergestellten Pigmentgranulate zum Einfärben von Kunststoffen, Lacken und Baustoffen und zur Herstellung von wäßrigen Dispersionsfarben, Abtönpasten und Slurries.

**Claims**

**1.** Pigment granules **characterized in that** the granules contain one or more inorganic pigments and one or more water-soluble, hydrophilic or hydrophobic/hydrophilic dispersion-promoting binders which are liquid at 25°C or mixtures liquid at 25°C of water-soluble, hydrophilic or hydrophobic/hydrophilic dispersion-promoting binders in an amount of 0.1 % to 10% by weight, based on pigment, have an average particle size of 50 to 1 500 $\mu$m, a bulk density of 0.3 to 1.8 g/cm$^3$ and a water content of $\leq$ 2% by weight, based on pigment.

EP 0 857 764 B2

**2.** Pigment granules according to Claim 1, **characterized in that** inorganic pigments used are iron oxides, titanium dioxides, zinc oxide, chromium oxides, lightfast pigments, bismuth vanadate, pigment grade carbon black and mixtures thereof.

**3.** Pigment granules according to Claim 1 or 2, **characterized in that** dispersion-promoting binders used are polyethylene or polypropylene glycols which are liquid at 25°C.

**4.** Pigment granules according to Claim 1 or 2, **characterized in that** polyglycols and/or fatty alcohol polyglycol ethers having melting points below 35°C and boiling points of 150°C to 300°C and preferably 200 to 300°C are used.

**5.** Pigment granules according to Claim 1, **characterized in that** liquid dispersion-promoting binders used are liquid mixtures of polyethylene or polypropylene glycols which are liquid at 25°C or liquid mixtures of polyethylene or polypropylene glycols which are liquid at 25°C mixed with polyglycol compounds having melting points above 35°C and/or polyhydric polyhydroxy compounds which are soluble in the polyethylene or polypropylene glycols which are liquid at 25°C.

**6.** Pigment granules according to Claim 1, **characterized in that** dispersion-promoting binders used are polyhydric alcohols such as diols, glycerol, sorbitol, trimethylolpropane, polypropylene glycol and fatty alcohol polyglycol ethers.

**7.** Pigment granules according to Claim 1, **characterized in that** hydrophilic groupings used for dispersion-promoting binders are polyhydric alcohols, sugars, cellulose and cellulose derivatives, sulphonates, polyacrylates, phosphates, polyethers, polyesters, polyaspartic acid, polyhydroxy compounds including in the form of ethers and esters.

**8.** Pigment granules according to Claim 1, **characterized in that** hydrophobic groupings used for dispersion-promoting binders are derivatives of fatty alcohols, fatty acids, long-chain alkyl groups or aryl groups and also silicone compounds.

**9.** Pigment granules according to Claim 1 to 8, **characterized in that** the granules additionally contain preservatives, defoamers, retention aids, antisettling agents, wetting agents and/or emulsifiers.

**10.** Process for producing the pigment granules according to Claim 1 to 9, **characterized in that** one or more inorganic pigment powders are mixed with one or more water-soluble, hydrophilic or hydrophobic/hydrophilic dispersion-promoting binders which are liquid at 25°C or mixtures liquid at 25°C of water-soluble, hydrophilic or hydrophobic/ hydrophilic dispersion-promoting binders in an amount of 0.1% to 10% by weight, based on the pigment powder, and this mixture is subjected to granulating directly or in the form of an aqueous suspension.

**11.** Process according to Claim 10, **characterized in that** the pigment granules are produced by spray drying.

**12.** Process according to Claims 10 and 11, **characterized in that** the granulation is effected by co- or countercurrent spraying through one- or two-material nozzles or via atomizing dryers to generate granules having an average particle size of 50 to 500 $\mu$m.

**13.** Process according to Claims 10 and 11, **characterized in that** the mixture is wet ground in the form of an aqueous suspension.

**14.** Process according to Claims 10 and 11, **characterized in that** the dry inorganic pigment powder is processed by use of water, aqueous suspensions or liquid dispersion-promoting binders on a rotary pan, in a rotary drum, in a mixer or in a fluidized bed process to form pigment granules having an average particle size of 80 to 1 500 $\mu$m.

**15.** Process according to Claim 13, **characterized in that** the dispersion-promoting binder is one of the polyhydric alcohols or a condensed polyol.

**16.** Process according to Claim 10, **characterized in that** the pigment granules are produced by compacting.

**17.** Process according to Claims 10 and 16, **characterized in that** inorganic pigment powders are mixed with one or more water-soluble, hydrophilic or hydrophobic/hydrophilic, liquid dispersion-promoting binders or mixtures liquid at 25°C of water-soluble, hydrophilic or hydrophobic/hydrophilic dispersion-promoting binders, subsequently compacted and coarse ground, a fraction having an average particle size of 100 to 1 000 $\mu$m is if appropriate freed from the remainder via sieving and this product fraction is if appropriate supplementarily rolled.

18. Process according to Claims 10, 16 and 17, **characterized in that** the compacting takes place using line forces of 0.1 to 50 kN/cm.

19. Process according to Claim 17, **characterized in that** water is used in amounts of less than 3%, based on the inorganic pigment, as dispersion-promoting binders.

20. Process according to Claim 19, **characterized in that** auxiliaries having low vapour pressures and/or boiling points above 180°C are used.

21. Process according to Claim 10, **characterized in that** the pigment granules are produced by size enlargement granulation.

22. Process according to Claims 10 and 21, **characterized in that** the granulating is effected by size enlargement granulation using rotary pans, rotary drums, mixers or in the fluidized bed process to produce pigment granules having an average particle size of 100 to 1 500 $\mu$m and especially of 125 to 1 000 $\mu$m.

23. Process according to Claim 19, **characterized in that** water amounts of 6% to 25% are used.

24. Process according to Claim 23, **characterized in that** the pigment granules are subsequently dried to a water level of less than 1%.

25. Process according to Claim 10 to 24, **characterized in that** the pigment granules are additionally aftertreated.

26. Process according to Claim 25, **characterized in that** the aftertreatment is effected by application of alcohols, esters, silicone compounds, amines, amides, polyols, polyethers, cellulose derivatives, polyacrylates and/or polyphosphates in an amount of 0.01% to 3% by weight, based on pigment granules.

27. Use of the pigment granules according to Claim 1 to 9 and of the pigment granules produced by the process according to Claims 10 to 26, for coloration of plastics, coatings and building materials and for producing aqueous emulsion paints, shading pastes and slurries.

**Revendications**

1. Granulés de pigment, **caractérisés en ce que** les granulés contiennent, dans une quantité de 0,1 à 10 % en poids, par rapport au pigment, un ou plusieurs pigments inorganiques et un ou plusieurs liants hydrosolubles, hydrophiles ou hydrophobes/hydrophiles, liquides à la température de 25°C, favorisant la dispersion ou des mélanges, liquides à la température de 25°C, de liants hydrosolubles, hydrophiles ou hydrophobes/hydrophiles, favorisant la dispersion, **en ce qu'**ils présentent une grandeur moyenne de particule de 50 à 1 500 $\mu$m, un poids en vrac de 0,3 à 1,8 g/cm$^3$ et une teneur en eau de $\leq$ 2 % en poids, par rapport au pigment.

2. Granulés de pigment selon la revendication 1, **caractérisés en ce que** l'on utilise, en tant que pigments inorganiques, des oxydes du fer, le dioxyde de titane, l'oxyde de zinc, les oxydes de chrome, des pigments stables à la lumière, le vanadate de bismuth, le noir de fumée (pigments de carbone), et des mélanges de ces derniers.

3. Granulés de pigment selon la revendication 1 ou 2, **caractérisés en ce que** l'on utilise, en tant que liants favorisant la dispersion, des polyéthylèneglycols ou des polypropylèneglycols liquides à la température de 25 °C.

4. Granulés de pigment selon la revendication 1 ou 2, **caractérisés en ce que** l'on utilise des polyglycols et/ou des éthers polyglycoliques d'alcools gras ayant des points de fusion en dessous de 35°C et des points d'ébullition de 150°C à 300°C, de préférence, de 200 à 300°C.

5. Granulés de pigment selon la revendication 1, **caractérisés en ce que** l'on utilise, en tant que liants liquides favorisant la dispersion, des mélanges liquides faits de polyéthylèneglycols ou de polypropylèneglycols liquides à la température de 25°C ou des mélanges liquides faits de polyéthylèneglycols ou de polypropylèneglycols liquides à la température de 25°C avec des composés polyglycoliques ayant des points de fusion au-dessus de 35°C et/ou des composés polyhydroxy polyvalents, qui sont solubles dans les polyéthylèneglycols ou les polypropylèneglycols liquides à la température de 25°C.

6. Granulés de pigment selon la revendication 1, **caractérisés en ce que** l'on utilise, en tant que liant favorisant la dispersion, des alcools polyhydriques comme les diols, la glycérine, le sorbitol, le triméthylolpropane, le polyéthylèneglycol et des éthers polyglycoliques d'alcools gras.

7. Granulés de pigment selon la revendication 1, **caractérisés en ce que** l'on utilise, en tant que groupements hydrophiles pour les liants favorisant la dispersion, des alcools polyhydriques, des sucres, la cellulose et des dérivés de la cellulose, des sulfonates, des polyacrylates, des phosphates, des polyéthers, l'acide polyaspartique, des composés polyhydroxy, également sous la forme d'éthers ou d'esters.

8. Granulés de pigment selon la revendication 1, **caractérisés en ce que** l'on utilise, en tant que groupements hydrophobes pour les liants favorisant la dispersion, des dérivés d'alcools gras, d'acides gras, de groupements alkyles ou de groupements aryles à longue chaîne ainsi que de composés de silicone.

9. Granulés de pigment selon les revendications 1 à 8, **caractérisés en ce que** les granulés contiennent en outre des agents de conservation, des agents anti-mousse, des agents de rétention, des agents empêchant les dépôts, des agents mouillants et/ou des émulsifiants.

10. Procédé en vue de la fabrication des granulés de pigment selon les revendications 1 à 9, **caractérisé en ce que** l'on mélange, dans une quantité de 0,1 à 10 % en poids, par rapport à la poudre de pigment, une ou plusieurs poudres de pigment inorganiques avec un ou plusieurs liants hydrosolubles, hydrophiles ou hydrophobes/hydrophiles, liquides à la température de 25°C, favorisant la dispersion et des mélanges, liquides à la température de 25°C, de liants hydrosolubles, hydrophiles ou hydrophobes/hydrophiles, favorisant la dispersion, et ce que l'on soumet ce mélange, directement ou sous la forme d'une suspension aqueuse, à un procédé de granulation.

11. Procédé selon la revendication 10, **caractérisé en ce que** les granulés de pigment sont fabriqués par séchage à pulvérisation.

12. Procédé selon les revendications 10 et 11, **caractérisé en ce que** la granulation se fait conformément au procédé de pulvérisation sous forme de co-courant ou de contre-courant par l'intermédiaire de buses à une ou à deux substances ou par l'intermédiaire d'un sécheur à pulvérisation, les granulés étant produits avec une grandeur moyenne de particule de 50 à 500 $\mu$m.

13. Procédé selon les revendications 10 et 11, **caractérisé en ce que** le mélange sous la forme d'une suspension aqueuse est soumis à une mouture à l'état humide.

14. Procédé selon les revendications 10 et 11, **caractérisé en ce que** la poudre de pigment inorganique sèche est traitée par utilisation d'eau, de suspensions aqueuses ou de liants liquides favorisant la dispersion sur un plateau tournant, dans un tambour rotatif, dans un malaxeur ou dans un procédé à couche fluidisée, pour former des granulés de pigment ayant une grandeur moyenne de particule de 80 à 1 500 $\mu$m.

15. Procédé selon la revendication 13, **caractérisé en ce que** le liant favorisant la dispersion est un des alcools polyhydriques ou un polyol condensé.

16. Procédé selon la revendication 10, **caractérisé en ce que** les granulés de pigment sont fabriqués par compactage.

17. Procédé selon les revendications 10 et 16, **caractérisé en ce que** les poudres de pigments inorganiques sont mélangées à un ou plusieurs liants hydrosolubles, hydrophiles ou hydrophobes/hydrophiles liquides, favorisant la dispersion ou à des mélanges liquides à la température de 25°C de liants hydrosolubles, hydrophiles ou hydrophobes/hydrophiles liquides, favorisant la dispersion, **en ce que** celles-ci sont ensuite compactées et égrugées, **en ce que**, le cas échéant, une fraction ayant une grandeur moyenne de particule de 100 à 1 000 $\mu$m, est débarrassée par tamisage du restant et **en ce que**, le cas échéant, cette dernière fraction de produit subit un procédé de roulage subséquent.

18. Procédé selon les revendications 10, 16 et 17, **caractérisé en ce que** le compactage a lieu avec des forces linéaires de 0,1 à 50 kN/cm.

**19.** Procédé selon la revendication 17, **caractérisé en ce que** l'on utilise, en tant que liant favorisant la dispersion, de l'eau, dans des quantités inférieures à 3%, par rapport au pigment inorganique.

**20.** Procédé selon la revendication 19, **caractérisé en ce que** l'on utilise des adjuvants à pressions de vapeur faibles et/ou à points d'ébullition supérieurs à 180°C.

**21.** Procédé selon la revendication 10, **caractérisé en ce que** les granulés de pigment sont fabriqués par le biais d'une granulation par accumulation.

**22.** Procédé selon les revendications 10 et 21, **caractérisé en ce que** la granulation se fait à l'aide d'une granulation par accumulation à l'aide d'un plateau tournant, d'un tambour rotatif, d'un malaxeur ou dans le procédé à couche fluidisée, des granulés de pigment ayant une grandeur moyenne de particule de 100 à 1 500 $\mu$m, en particulier de 125 à 1 000 $\mu$m, étant produits.

**23.** Procédé selon la revendication 19, **caractérisé en ce que** l'on utilise des quantités d'eau de 6 à 25%.

**24.** Procédé selon la revendication 23, **caractérisé en ce que** les granulés de pigment sont ensuite séchés, de manière à obtenir une quantité d'eau de moins de 1%.

**25.** Procédé selon la revendication 10 à 24, **caractérisé en ce que** les granulés de pigment subissent en outre un traitement subséquent.

**26.** Procédé selon la revendication 25, **caractérisé en ce que** le traitement subséquent se fait par application d'alcools, d'esters, de composés de silicone, d'amines, d'amides, de polyols, de polyéthers, de dérivés de la cellulose, de polyacrylates et/ou de polyphosphates, dans une quantité de 0,01 à 3% en poids, par rapport aux granulés de pigment.

**27.** Utilisation des granulés de pigment selon la revendications 1 à 9, et des granulés de pigment fabriqués conformément au procédé selon les revendications 10 à 26, en vue de la coloration de matières synthétiques, de vernis et de matériels de construction et en vue de la fabrication de couleurs de dispersion, de pâtes de nuance et de suspensions.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0257423 A
- DE 33841848 A
- EP 0424896 A
- DE 3132303 A
- EP 0144940 A
- DE 2844710 A
- DE 2819004 C
- GB 2158084 A
- US 4952617 A
- DE 4336612 C
- US 3843380 A